# EUROPEAN PATENT SPECIFICATION

(11) **EP 1 867 562 B1**
(45) Date of publication and mention of the grant of the patent: **19.08.2009**
(21) Application number: 07011330.3
(22) Date of filing: 08.06.2007
(51) Int. Cl.: B62J 15/02

(54) **Fastener for a fender and a supporting rod of cycles**
Befestiger für Radschützer und Streben von Zweirädern
Attache pour un garde-boue et tringle de support de cycles

(30) Priority: 16.06.2006 IT VI20060187
(43) Date of publication of application: 19.12.2007
(73) Proprietor: Passuello, Ivan, 31020 San Zenone Degli Ezzelini TV (IT)
(72) Inventor: Passuello, Ivan, 31020 San Zenone Degli Ezzelini TV (IT)
(74) Representative: Forattini, Amelia

(56) References cited:
- EP-A- 1 466 822
- EP-A- 1 790 558
- EP-A2- 1 386 833
- DE-U1- 29 721 380
- GB-A- 2 383 314
- NL-C2- 1 022 857

## Description

The present invention relates to a fastener particularly for a fender and a supporting rod of cycles.

As is known, fenders are installed in bicycles by means of fasteners that allow to connect the fenders to the supporting rods of the bicycle frame.

The simplest devices are constituted by metallic accessories that are riveted onto the fenders and are joined by means of bolts to the supporting rods, while others are constituted by small clamps made of synthetic material, that clamp the fenders and the supporting rods by means of screws.

In all of the devices described above, and in many of their variations, it is necessary to use metallic components, and this affects both production times and the aesthetic performance of the product.

Some of the cited drawbacks have been solved by other types of fastener devices completely made of molded synthetic material and constituted by one or more components, that allow to clamp the supporting rods and to engage the fastener devices to the fenders without resorting to screws or other metallic accessories at all.

EP-A-1386833 discloses a fastener for fastening the fender to a supporting rod wherein the supporting rod is slidingly associated with the fastener body and clamped by means of a screw.

In those types of devices, because the supporting rod is retained exclusively by the compression applied thereto by a component made of molded synthetic material, clamping may not offer adequate assurances of retention, because the clamping force may deform the device, reducing its engagement with the supporting rod.

The aim of the invention is to solve the problems described above by providing a fastener, particularly for a fender and a supporting rod of cycles, which can engage, detachably and without using screws or other accessories, simultaneously a supporting rod and a fender, and is extremely safe against accidental disengagement from the supporting rod.

Within the scope of this aim, a particular object of the invention is to provide a fastener in which the force that ensures the retention of the rod acts so as to increase as the stresses increase.

A further object of the invention is to provide a fastener which is solid, safe and quick to apply.

A further object of the invention is to provide a fastener which can be manufactured at competitive costs and is advantageous from a purely economic standpoint.

This aim and these and other objects, which will become better apparent hereinafter, are achieved by a fastener, particularly for a fender and a supporting rod of cycles, comprising a main body which forms a seat slidingly accommodating a portion of the supporting rod and comprises at least one hook and at least one abutment tooth, formed transversely with respect to the longitudinal axis of the seat, in order to detachably associate the main body with a plurality of contoured slots formed in the fender, an interference locking means is joined to the main body in order to stop a relative sliding between the supporting rod and the main body, in a locking condition, characterized in that said interference locking means comprises at least one perforated elastic blade, which is joined to said main body transversely to the longitudinal axis of said seat, said perforated elastic blade slidingly accommodating said supporting rod, in a release condition, and interfering with said supporting rod, in said locking condition in order to prevent a relative sliding between said supporting rod and said main body.

Further characteristics and advantages will become better apparent from the description of preferred but not exclusive embodiments of a fastener according to the invention, illustrated by way of non-limiting example in the accompanying drawings, wherein:

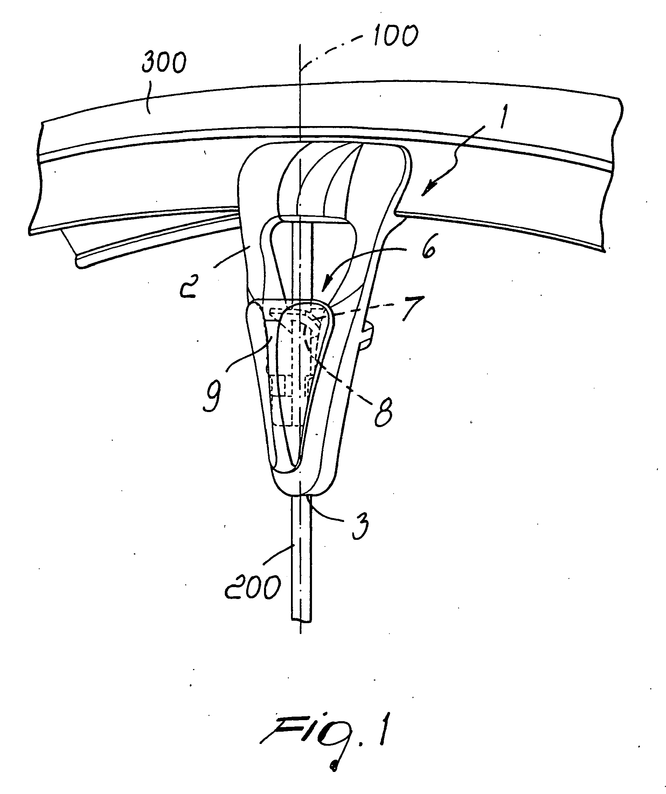

Figure 1 is a perspective view, partially in phantom lines, of a fastener according to the invention in the locking condition;

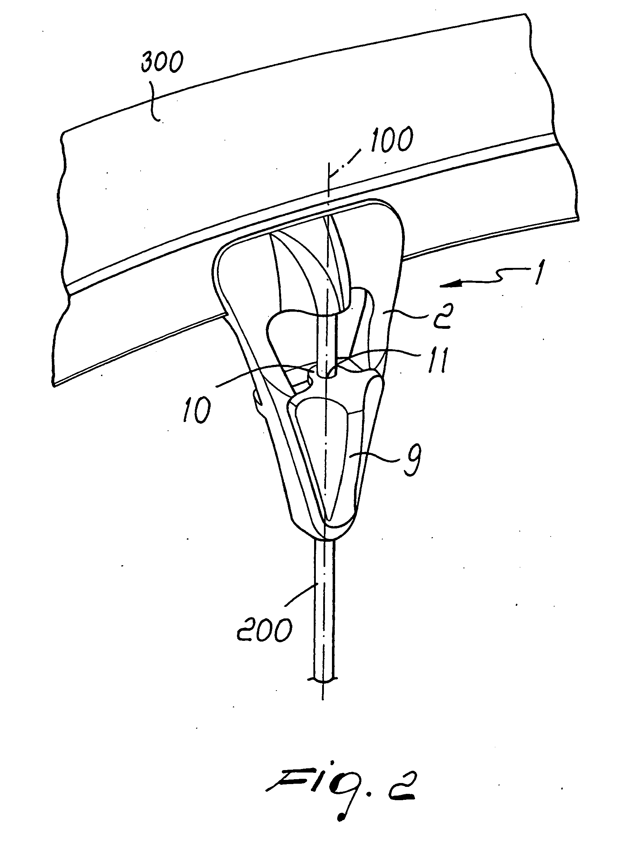

Figure 2 is another perspective view of the fastener according to the invention in the locking condition;

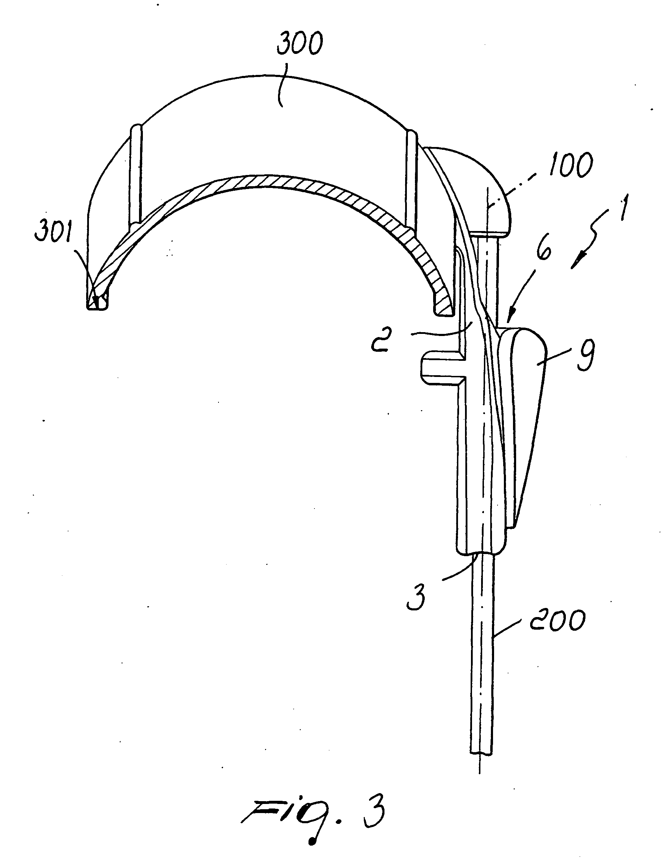

Figure 3 is a side view of the fastener according to the invention in the locking condition;

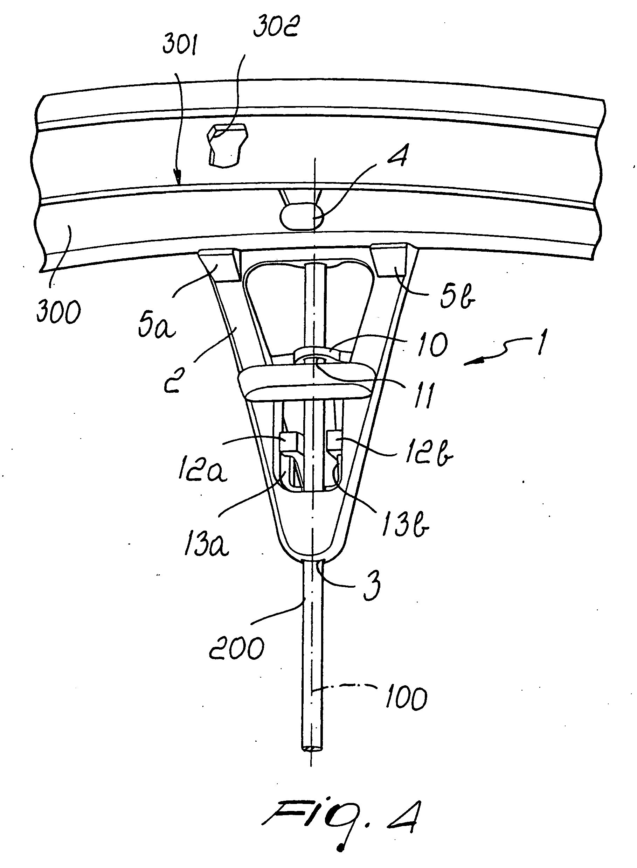

Figure 4 is a front view of the fastener according to the invention in the locking condition.

With reference to the cited figures, the fastener, according to the invention, generally designated by the reference numeral 1 is made, for example, of molded synthetic material and comprises a main body 2 which forms a seat 3 which has a longitudinal axis 100. The seat 3 has a shape adapted to slidingly accommodate a portion of a supporting rod 200.

The main body 2 has a hook 4 which is formed by an elliptical head, which lies transversely to the longitudinal axis 100, and by a stem which is joined monolithically to the main body 2. The main body 2, and therefore the entire fastener 1, may therefore be engaged with a plurality of contoured slots 302 that are formed proximate to the lateral edge 301 and are substantially T-shaped. The portion of each contoured slot 302 which is parallel to the lateral edge 301 is in fact substantially complementary to the profile of the elliptical head, while the portion arranged transversely to the lateral edge 301 is shaped complementarily with respect to the stem 6. The detachable engagement of the main body 2 with the fender 300 is completed by two abutment teeth 5a and 5b, that are formed monolithically with the main body 2, transversely to the longitudinal axis 100, so as to interact with the lateral edge 301 of the fender 300, preventing the stem from sliding in the portion of the slot 302 that lies transversely to the lateral edge 301, with subsequent disengagement of the elliptical head.

According to the invention, an interference locking means 6 is joined to the main body 2 in order to prevent the relative sliding between the main body and the supporting rod 200 in a locking condition.

The interference locking means 6 has at least one perforated elastic blade 7, which is made, for example, of spring steel, and is provided with a hole 8 which is shaped substantially complementarily to the shape of the transverse cross-section of the supporting rod 200 and is larger than the cross-section. The perforated elastic blade 7 is joined to the main body 2, transversely and not at right angles to the longitudinal axis 100, so as to interfere with the supporting rod 200 in the locking condition and prevent the relative sliding thereof with respect to the main body 2.

The interference locking means 6 has a release slider 9, which is also made for example of molded synthetic material, which is slidingly associated both with the main body 2 and with the supporting rod 200. The release slider 9, whose axis of action is substantially parallel to the longitudinal axis 100, in fact has an abutment ledge 10, which protrudes transversely with respect to the longitudinal axis 100 and is provided with a sliding guide 11 which is shaped substantially complementarily with respect to the transverse cross-section of the supporting rod 200 and is therefore such as to slidingly accommodate the rod 200. The motion of the release slider 9 is also guided by a pair of hooks 12a and 12b, that protrude transversely to the longitudinal axis 100 and are guided in their sliding by two rails 13a and 13b, that are formed in the main body 2 parallel to the longitudinal axis 100.

The length of the rails 13a and 13b, and consequently the stroke of the release slider 9, is chosen so that the abutment ledge 10, during its motion, can interact with the perforated elastic blade 7, moving it from the locking position, in which it lies transversely and not at right angles to the longitudinal axis 100, and interferes with the supporting rod 200, to the release position, in which it is perpendicular to the longitudinal axis 100 and accommodates slidingly the supporting rod 200.

According to a further aspect of the invention, which is not shown in the accompanying figures, the interference locking means has two perforated elastic blades, that are substantially identical to the one already described in relation to the preceding embodiment.

The perforated elastic blades, that form a substantially Y-shaped monolithic body associated with the main body, are arranged transversely and not at right angles to the longitudinal axis 100 and lie on diverging planes.

This refinement causes both perforated elastic blades to interfere, in the locking condition, with the supporting rod 200, preventing its sliding with respect to the main body in both directions.

In this embodiment, the interference locking means includes a release slider which is slidingly associated both with the main body and with the supporting rod 200, so as to be able to alternately interact with both of the perforated elastic blades by sliding parallel to the longitudinal axis 100.

The release slider in fact has two substantially parallel abutment ledges that protrude transversely to the longitudinal axis 100 and are provided with sliding guides slidingly accommodating the supporting rod 200, and at least two hooks, that protrude transversely thereat with respect to the longitudinal axis 100 and are guided in their sliding by the rails formed on the main body.

The length of the rails is set so that, during the sliding of the release slider, the abutment ledges can interact alternately with the perforated elastic blades in order to release the sliding in the chosen direction in the manner already described earlier.

The operation of the fastener according to the invention is as follows.

The fastener 1 is detachably engaged with the fender 300 by introducing the elliptical head of the hook 4 in one of the contoured slots 302 and by sliding the stem in the portion of the contoured slot 302 that lies transversely to the lateral edge 301, until the abutment teeth 5a and 5b engage by snap action with the edge.

Subsequently, a portion of the supporting rod 200 is inserted in the seat 3, acting simultaneously on the release slider 9 and making it slide so as to flex the perforated elastic blade 7 and move it to a position which is substantially perpendicular to the longitudinal axis 100. In this manner, the supporting rod 200 is slidingly accommodated within the hole 8 as well as in the seat 3 and in the sliding guide 11, and it is possible to adjust its insertion depth, consequently changing the distance between the hub and the fender 300. Once the external pressure on the release slider 9 ceases, the perforated elastic blade 7 spontaneously returns to its original position, which is transverse and not perpendicular to the longitudinal axis 100, and interferes with the supporting rod 200, locking its sliding with respect to the main body 2.

To release the fastener 1 from the supporting rod 200, the perforated elastic blade 7 is moved into a position which is substantially perpendicular to the longitudinal axis 100 by acting on the release slider 9 as described earlier.

The engagement of a fastener with two perforated elastic blades is also partially similar; during the engagement, a portion of the supporting rod 200 is inserted in the seat formed in the main body, acting simultaneously on the release slider and making it slide so as to flex the perforated elastic blade which, among the two, would contrast the motion of the supporting rod 200, until it reaches a position which is substantially perpendicular to the longitudinal axis 100. In this manner, the supporting rod 200 can slide freely in the direction that allows to adjust its insertion depth in the main body. Once the external pressure on the release slider has ceased, the perforated elastic blade, that had undergone the temporary deformation, spontaneously returns to its original position, which is transverse and not perpendicular to the longitudinal axis 100, and interferes with the supporting rod 200, the sliding of which with respect to the main body is locked in both directions.

The fastener may be released from the supporting rod 200 is possible only by acting on the release slider, which in this case moves the perforated elastic blade, that in the engagement operation has not been deformed, to a position which is substantially perpendicular to the longitudinal axis 100.

In practice it has been found that the fastener, according to the invention, fully achieves the intended aim, since it can detachably engage simultaneously a supporting rod and a fender, without using screws or other accessories, and also provides high safety against accidental disengagement from the supporting rod.

The fastener according to the invention, is simple to apply and producible at modest costs.

In the fastener according to the invention, the force that ensures the retention of the rod increase as the stresses increase.

## Claims

1. A fastener, particularly for a fender and a supporting rod of cycles, comprising a main body (2) which forms a seat (3) slidingly accommodating a portion of said supporting rod (200) and comprises at least one hook (4) and at least one abutment tooth (5a, 5b), formed transversely with respect to the longitudinal axis (100) of said seat (3), in order to detachably associate said main body (2) with a plurality of contoured slots (302) formed in said fender (300); an interference locking means (6) is joined to said main body (2) in order to stop the relative sliding between said supporting rod (200) and said main body (2), in a locking condition, **characterized in that** said interference locking means (6) comprises at least one perforated elastic blade (7), which is joined to said main body (2) transversely to the longitudinal axis (100) of said seat (3), said perforated elastic blade (7) slidingly accommodating said supporting rod (200), in a release condition, and interfering with said supporting rod (200), in said locking condition in order to prevent a relative sliding between said supporting rod (200) and said main body (2).

2. The fastener according to claim 1, **characterized in that** said perforated elastic blade (7) comprises a hole (8) which is formed with a shape which is substantially complementary to the shape of the transverse cross-section of said supporting rod (200).

3. The fastener according to claim 1, **characterized in that** said interference locking means comprises two perforated elastic blades that are joined so as to form a substantially Y-shaped monolithic body, which is connected to said main body in order to arrange said perforated elastic blades transversely to the longitudinal axis of said seat, said perforated elastic blades slidingly accommodating said supporting rod, in said release condition, and interfering with said supporting rod in said locking condition, in order to prevent a relative sliding in both directions between said supporting rod and said main body, said perforated elastic blades being arranged on diverging planes.

4. The fastener according to claim 2, **characterized in that** said interference locking means (6) comprises at least one release slider (9), which is slidingly associated with said main body (2) and has an axis of action which is substantially parallel to the longitudinal axis (100) of said seat (3), said release slider (9) interacting with said perforated elastic blade (7) in order to pass from said locking condition to said release condition, moving said perforated elastic blade (7) into a position which is substantially perpendicular to the longitudinal axis (100) of said seat (3) during said release condition.

5. The fastener according to claim 4, **characterized in that** said release slider (9) comprises an abutment bracket (10) which is formed transversely to said longitudinal axis (100) of said seat (3) in order to interact with said perforated elastic blade (7) during the sliding of said release slider (9).

6. The fastener according to claim 5, **characterized in that** said release slider (9) comprises a sliding guide (11) which is formed on said abutment bracket (10) with a shape which is substantially complementary to the shape of the transverse cross-section of said supporting rod (200), said sliding guide (11) slidingly accommodating said supporting rod (200).

7. The fastener according to claim 4, **characterized in that** said release slider comprises two substantially parallel abutment brackets, that are formed transversely to said longitudinal axis of said seat in order to interact alternately with said perforated elastic blades during the sliding of said release slider.

8. The fastener according to claim 7, **characterized in that** said release slider (9) comprises two hooks (12a, 12b) that are formed transversely to the longitudinal axis (100) of said seat (3) in order to slidingly associate said release slider (9) with said main body (2).

9. The fastener according to claim 8, **characterized in that** said interference locking means (6) comprises two rails (13a, 13b) formed on said main body (2) and extending substantially parallel to the longitudinal axis (100) of said seat (3), said rails (13a, 13b) being associable with said pair of hooks (12a, 12b) in order to slidingly support said release slider (9).

10. The fastener according to one or more of the preceding claims, **characterized in that** said hook (4) comprises an elliptical head which is monolithic with a stem which is joined to said main body (2), the longitudinal axis of said elliptical head being transverse to the longitudinal axis (100) of said seat (3).

11. A fastener and fender assembly, particularly for fastening to a supporting rod of a cycle, comprising a main body (2) which forms a seat (3) slidingly accommodating a portion of said supporting rod (200) and comprises at least one hook (4) and at least one abutment tooth (5a, 5b), formed transversely with respect to the longitudinal axis (100) of said seat (3), in order to detachably associate said main body (2) with a plurality of contoured slots (302) formed in said fender (300); an interference locking means (6) is joined to said main body (2) in order to stop the relative sliding between said supporting rod (200) and said main body (2), in a locking condition, **characterized in that** said interference locking means (6) comprises at least one perforated elastic blade (7), which is joined to said main body (2) transversely to the longitudinal axis (100) of said seat (3), said perforated elastic blade (7) slidingly accommodating said supporting rod (200), in a release condition, and interfering with said supporting rod (200), in said locking condition in order to prevent a relative sliding between said supporting rod (200) and said main body (2); said assembly being further **characterized in that** said contoured slots (302) are substantially T-shaped and are formed proximate to a lateral edge (301) of said fender (300), the portion of each of said contoured slots (302) which is substantially parallel to said lateral edge (301) being shaped substantially complementarily to the profile of said elliptical head, the portion of each of said contoured slots (302) that lies transversely to said lateral edge (301) being shaped substantially complementarily with respect to the profile of said stem (6).

## Patentansprüche

1. Befestiger, insbesondere für ein Schutzblech und eine Strebe von zweirädern, mit einem Hauptkörper (2), der einen Sitz (3) bildet, der einen Abschnitt der Strebe (200) gleitend aufnimmt und mindestens einen Haken (4) und mindestens einen bezüglich der Längsachse (100) des Sitzes (3) quer ausgebildeten Anschlagzahn (5a, 5b) umfasst, um dem Hauptkörper (2) mehrere in dem Radschützer (300) ausgebildete konturierte Schlitze (302) lösbar zuzuordnen, wobei ein Pressverriegelungsmittel (6) mit dem Hauptkörper (2) verbunden ist, um das Relativgleiten zwischen der Strebe (200) und dem Hauptkörper (2) in einem Verriegelungszustand zu stoppen, **dadurch gekennzeichnet, dass** das Pressverriegelungsmittel (6) mindestens ein perforiertes elastisches Blatt (7) umfasst, das mit dem Hauptkörper (2) quer zur Längsachse (100) des Sitzes (3) verbunden ist, wobei das perforierte elastische Blatt (7) die Strebe (200) in einem Freigabezustand gleitend aufnimmt und die Strebe (200) im Verriegelungszustand behindert, um ein Relativgleiten zwischen der Strebe (200) und dem Hauptkörper (2) zu verhindern.

2. Befestiger nach Anspruch 1, **dadurch gekennzeichnet, dass** das perforierte elastische Blatt (7) ein Loch (8) mit einer Form aufweist, die zu der Form des Querschnitts der Strebe (200) im Wesentlichen komplementär ist.

3. Befestiger nach Anspruch 1, **dadurch gekennzeichnet, dass** das Pressverriegelungsmittel zwei perforierte elastische Blätter umfasst, die miteinander verbunden sind, um einen im Wesentlichen Y-förmigen einstückigen Körper zu bildern, der mit dem Hauptkörper verbunden ist, um die perforierten elastischen Blätter quer zur Längsachse des Sitzes anzuordnen, wobei die perforierten elastischen Blätter die Strebe im Freigabezustand gleitend aufnehmen und die Strebe im Verriegelungszustand behindern, um in beiden Richtungen ein Relativgleiten zwischen der Strebe und dem Hauptkörper zu verhindern, wobei die perforierten elastischen Blätter auf divergierenden Ebenen angeordnet sind.

4. Befestiger nach Anspruch 2, **dadurch gekennzeichnet, dass** das pressverriegelungsmittel (6) mindestens einen Freigabeschieber (9) umfasst, der dem Hauptkörper (2), gleitend zugeordnet ist und eine Wirkachse hat, die im Wesentlichen parallel zur Längsachse (100) des Sitzes (3) verläuft, wobei der Freigabeschieber (9) mit dem perforierten elastischen Blatt (7) zusammenwirkt, so dass es vom Verriegelungszustand in den Freigabezustand übergeht, wobei das perforierte elastische Blatt (7) in eine Postition bewegt wird, die im Freigabezustand zur Längsachse (100) des Sitzes (3) im Wesentlichen senkrecht ist.

5. Befestiger nach Anspruch 4, **dadurch gekennzeichnet, dass** der Freigabeschieber (9) eine Anschlagkonsole (10) umfasst, die quer zur Längsachse (100) des Sitzes (3) ausgebildet ist, um während des Gleitens des Freigabeschiebers (9) mit dem perforierten elastischen Blatt (7) zusammenzuwirken.

6. Befestiger nach Anspruch 5, **dadurch gekennzeichnet, dass** der Freigabeschieber (9) eine Gleitführung (11) umfasst, die an der Anschlagkonsole (10) ausgebildet ist und deren Form zu der Form des Querschnitts der Strebe (200) im Wesentlichen komplementär ist, wobei die Gleitführung (11) die Strebe (200) gleitend aufnimmt.

7. Befestiger nach Anspruch 4, **dadurch gekennzeichnet, dass** der Freigabeschieber zwei im Wesentlichen parallele Anschlagkonsolen umfasst, die quer zur Längsachse des Sitzes ausgebildet sind, um während des Gleitens des Freigabeschiebers abwechselnd mit den perforierten elastischen Blättern zusammenzuwirken.

8. Befestiger nach Anspruch 7, **dadurch gekennzeichnet**, das der Freigabeschieber (9) zwei Haken (12a, 12b) umfasst, die quer zur Längsachse (100) des Sitzes (3) ausgebildet sind, um den Freigabeschieber (9) gleitend dem Hauptkörper (2) zuzuordnen.

9. Befestiger nach Anspruch 8, **dadurch gekennzeichnet, dass** das Pressverriegelungsmittel (8) zwei Schienen (13a, 13b) umfasst, die am Hauptkörper (2) ausgebildet sind und sich im Wesentlichen parallel zur Längsachse (100) des Sitzes (3) erstrecken, wobei die Schienen (13a, 13b) dem Paar Haken (12a, 12b) zugeordnet werden können, um den Freigabeschieber (9) gleitend zu stützen.

10. Befestiger nach einem oder mehreren der vorhergehenden Ansprüche, **dadurch gekennzeichnet, dass** der Haken (4) einen elliptischen Kopf umfasst, der mit einem mit dem Hauptkörper (2) verbundenen Schaft einstückig ist, wobei die Längsachse des elliptischen Kopfs quer zur Längsachse (100) des Sitzes (3) verläuft.

11. Anordnung aus Befestiger und Schutzblech, besonders zum Befestigen einer Strebe eines Zweirads, mit einem Hauptkörper (2), der einen Sitz (3) bildet, der einen Abschnitt der Strebe (200) gleitend aufnimmt, und der mindestens einen Haken (4) und mindestens einen bezüglich der Längsachse (100) des Sitzes (3) quer ausgebildeten Anschlagzahn (5a, 5b) umfasst, um dem Hauptkörper (2) mehrere in dem Radschützer (300) ausgebildete konturierte Schlitze (302) lösbar zuzuordnen, wobei ein Pressverriegelungsmittel (6) mit dem Hauptkörper (2) verbunden ist, um das Relativgleiten zwischen der Strebe (200) und dem Hauptkörper (2) in einem Verriegelungszustand zu stoppen, **dadurch gekennzeichnet, dass** das Pressverriegelungsmittel (6) mindestens ein perforiertes elastisches Blatt (7) umfasst, das mit dem Hauptkörper (2) quer zur Längsachse (100) des Sitzes (3) verbunden ist, wobei das perforierte elastische Blatt (7) die Strebe (200) in einem Freigabezustand gleitend aufnimmt und die Strebe (200) im Verriegelungszustand behindert, um ein Relativgleiten zwischen der Strebe (200) und dem Hauptkörper (2) zu verhindern; wobei die Anordnung weiter **dadurch gekennzeichnet ist, dass** die konturierten Schlitze (302) im Wesentlichen T-förmig und neben einem Seitenrand (301) des Schutzblechs (300) ausgebildet sind, wobei der Abschnitt jedes der konturierten Schlitze (302), der im Wesentlichenparallel zum Seitenrand (301) verläuft, im Wesentlichen komplementär zum Profil des elliptischen Kopfes ausgebildet ist, wobei der Abschnitt jedes der konturierten Schlitze (302), der quer zum Seitenrand (301) liegt, im wesentlichen komplementär bezüglich des Profils des Schafts (6) ausgebildet ist.

## Revendications

1. Attache, en particulier pour un garde-boue et une tige de support de cycles, comprenant un corps principal (2) qui forme un siège (3) contenant de manière coulissante une partie de ladite tige de support (200) et qui comprend au moins un crochet (4) et au moins une dent de butée (5a, 5b), formée transversalement par rapport à l'axe longitudinal (100) dudit siège (3), afin d'associer de manière détachable ledit corps principal (2) à une pluralité de fentes profilées (302) formées dans ledit garde-boue (300) ; un moyen de blocage avec serrage (6) qui est joint audit corps principal (2) afin d'arrêter le coulissement relatif entre ladite tige de support (200) et ledit corps principal (2), dans une condition de blocage, **caractérisée en ce que** ledit moyen de blocage avec serrage (6) comprend au moins une lame élastique perforée (7), qui est jointe audit corps principal (2) transversalement à l'axe longitudinal (100) dudit siège (3), ladite lame élastique perforée (7) contenant de manière coulissante ladite tige de support (200), dans une condition de libération, et serrant ladite tige de support (200), dans ladite condition de blocage afin d'éviter un coulissement relatif entre ladite tige de support (200) et ledit corps principal (2).

2. Attache selon la revendication 1, **caractérisée en ce que** ladite lame élastique perforée (7) comprend un trou (8) qui a une forme qui est sensiblement complémentaire de la forme de la section transversale de ladite tige de support (200).

3. Attache selon la revendication 1, **caractérisée en ce que** ledit moyen de blocage avec serrage comprend deux lames élastiques perforées qui sont jointes de manière à former un corps monolithique sensiblement en forme de Y, qui est relié audit corps principal afin d'agencer lesdites lames élastiques perforées transversalement par rapport à l'axe longitudinal dudit siège, lesdites lames élastiques perforées contenant de manière coulissante ladite tige de support, dans ladite condition de libération, et serrant ladite tige de support dans ladite condition de blocage, afin d'éviter un coulissement relatif dans les deux directions entre ladite tige de support et ledit corps principal, lesdites lames élastiques perforées étant agencées dans des plans divergents.

4. Attache selon la revendication 2, **caractérisée en ce que** ledit moyen de blocage avec serrage (6) comprend au moins un dispositif coulissant de libération (9), qui est associé de manière coulissante audit corps principal (2) et qui a un axe d'action qui est sensiblement parallèle à l'axe longitudinal (100) dudit siège (3), ledit dispositif coulissant de libération (9) interagissant avec ladite lame élastique perforée (7) afin de passer de ladite condition de blocage à ladite condition de libération, déplaçant ladite lame élastique perforée (7) dans une position qui est sensiblement perpendiculaire à l'axe longitudinal (100) dudit siège (3) dans ladite condition de libération.

5. Attache selon la revendication 4, **caractérisée en ce que** ledit dispositif coulissant de libération (9) comprend un support de butée (10) qui est formé transversalement audit axe longitudinal (100) dudit siège (3) afin d'interagir avec ladite lame élastique perforée (7) pendant le coulissement dudit dispositif coulissant de libération (9).

6. Attache selon la revendication 5, **caractérisée en ce que** ledit dispositif coulissant de libération (9) comprend un guide de coulissement (11) qui est formé sur ledit support de butée (10) avec une forme qui est sensiblement complémentaire de la forme de la section transversale de ladite tige de support (200), ledit guide de coulissement (11) contenant de manière coulissante ladite tige de support (200).

7. Attache selon la revendication 4, **caractérisée en ce que** ledit dispositif coulissant de libération comprend deux supports de butée sensiblement parallèles, qui sont formés transversalement audit axe longitudinal dudit siège afin d'interagir alternativement avec lesdites lames élastiques perforées pendant le coulissement dudit dispositif coulissant de libération.

8. Attache selon la revendication 7, **caractérisée en ce que** ledit dispositif coulissant de libération (9) comprend deux crochets (12a, 12b) qui sont formés transversalement à l'axe longitudinal (100) dudit siège (3) afin d'associer de manière coulissante ledit dispositif coulissant de libération (9) audit corps principal (2).

9. Attache selon la revendication 8, **caractérisée en ce que** ledit moyen de blocage avec serrage (6) comprend deux rails (13a, 13b) formés sur ledit corps principal (2) et s'étendant sensiblement parallèlement à l'axe longitudinal (100) dudit siège (3), lesdits rails (13a, 13b) pouvant être associés à ladite paire de crochets (12a, 12b) afin de supporter de manière coulissante ledit dispositif coulissant de libération (9).

10. Attache selon une ou plusieurs des revendications précédentes, **caractérisée en ce que** ledit crochet (4) comprend une tête elliptique qui est d'un seul tenant avec une tige qui est jointe audit corps principal (2), l'axe longitudinal de ladite tête elliptique étant transversal à l'axe longitudinal (100) dudit siège (3).

11. Ensemble d'attache et de garde-boue, en particulier pour une fixation à une tige de support d'un cycle, comprenant un corps principal (2) qui forme un siège (3) contenant de manière coulissante une partie de ladite tige de support (200) et qui comprend au moins un crochet (4) et au moins une dent de butée (5a, 5b), formée transversalement à l'axe longitudinal (100) dudit siège (3), afin d'associer de manière détachable ledit corps principal (2) à une pluralité de fentes profilées (302) formées dans ledit garde-boue (300) ; un moyen de blocage avec serrage (6) qui est joint audit corps principal (2) afin d'arrêter le coulissement relatif entre ladite tige de support (200) et ledit corps principal (2), dans une condition de blocage, **caractérisé en ce que** ledit moyen de blocage avec serrage (6) comprend au moins une lame élastique perforée (7), qui est jointe audit corps principal (2) transversalement à l'axe longitudinal (100) dudit siège (3), ladite lame élastique perforée (7) contenant de manière coulissante ladite tige de support (200), dans une condition de libération, et serrant ladite tige de support (200), dans ladite condition de blocage afin d'éviter un coulissement relatif entre ladite tige de support (200) et ledit corps principal (2) ; ledit ensemble étant en outre **caractérisé en ce que** lesdites fentes profilées (302) sont sensiblement en forme de T et sont formées à proximité d'un bord latéral (301) dudit garde-boue (300), la partie de chacune desdites fentes profilées (302) qui est sensiblement parallèle audit bord latéral (301) étant formée sensiblement de manière complémentaire au profil de ladite tête elliptique, la partie de chacune desdites fentes profilées (302) qui est transversale audit bord latéral (301) étant formée sensiblement de manière complémentaire au profil de ladite tige (6).
